# EUROPEAN PATENT SPECIFICATION

(11) **EP 2 168 774 B1**
(45) Date of publication and mention of the grant of the patent: **09.02.2011**
(21) Application number: 08017245.5
(22) Date of filing: 30.09.2008
(51) Int. Cl.: B41J 3/407, B41M 5/00, B44F 1/06, C03B 19/06, C03C 17/00, C03C 17/34

(54) **Method and apparatus for preparing decorated glass**
Verfahren und Vorrichtung zum Herstellen von Dekorglas
Procédé et appareil pour préparer du verre décoré

(43) Date of publication of application: 31.03.2010
(73) Proprietor: Glassdecor Revestimientos S.L., 46529 Canet d'en Berenger, Valencia (ES)
(72) Inventor: Arcas, Pedro, Gasso, 46250 Puerto de Sagunto Valencia (ES); Romero, Ricardo, Rodriguez, 46023 Valencia (ES)
(74) Representative: Grünecker, Kinkeldey, Stockmair & Schwanhäusser Anwaltssozietät

(56) References cited:
- EP-A- 1 223 201
- EP-A- 1 350 629
- WO-A-2005/018941
- WO-A-2008/066922
- DE-A1-102007 008 443
- JP-A- 2004 099 432
- US-A- 3 482 149
- US-A1- 2007 130 993

## Description

The present invention refers to a method and apparatus for preparing decorated glass.

In order to prepare decorations with glass it is known to paint a decorative motif onto the glass or to compose an image of differently colored glass pieces like in a glass mosaic or in Tiffany glass decorations.

For any of those techniques major artistic capabilities are required in order to prepare decorated glass.

The object of the invention is, therefore, to provide a method and apparatus for decorating glass, which is easier to use and more flexible at the time of the choice of the desired decorative motif.

This object is met with the method of claim 1 and the apparatus of claim 10.

According the method for preparation of a decorative glass, at first the surface is prepared, which allows using an ink jet printer to print the decorative motif onto the surface. It was discovered that such a surface preferably is porous in order to allow the absorption of ink droplets into the surface. In this way, the spreading out of ink dots onto a smooth surface is avoided. After having printed the decorative motif onto the porous surface the glass is baked at elevated temperatures. The pores in the porous surface are thereby closed, at least to a large amount such that, a surface is obtained which is mechanically resistant, against e.g. cleaning.

During the baking process, furthermore, the colorants of the ink are incorporated into the glass body at a distance from the surface. This increases the resistance of the decorative motif against abrasion or scratches. Also, chemical agents such as cleaning agents may not affect the incorporated colors.

During the baking process, furthermore, chemical reactions may occur, which make the colorants react with the glass material in order to create the desired colors.

DE 10 2007 008 443 A discloses a method of depositing a glass frit on a glass substrate to provide a porous surface which is subsequently decorated by ink jet printing. After printing the glass is baked.

In the present invention, the porous surface is obtained by pressing a glass powder with pressures of preferably at least 20 bar, 50 bar, 80 bar or 100 bar. The pressure may be less than 200 bar, 150 bar or 120 bar. At such pressures of more than 20 bar to 100 bar a sufficient compression of the glass powder is obtained. The higher the pressure the more rigid is the compressed glass powder.

Furthermore, in order to prepare the porous surface it is preferred to have the glass powder stabilized with a liquid. This increases the adhesion of the glass particles with each other. The liquid is preferably water. Other liquids may be used instead.

The liquid may additionally have additives provided. Such additives may affect the distribution of the ink in the porous surface upon printing or may affect the adhesion of the particles of the glass powder with each other. E.g. additives having a gluing effect are possible. The additives may be such that the gluing effect still exists after the liquid has evaporated.

The preferred amount of liquid in relation to the glass powder is in the range of 1 - 4 weight percent and even more preferred between 1.5 - 2.5 percent. With such amounts of liquid adhesion between the different particles can be sufficiently increased.

In order to obtain a high compactness of the glass powder, the glass powder is a mixture of glass particles with different diameters. The glass particles have the size between 20 and 500 micrometers. One part of the glass particles as for example at least 10, 20, 30 or 40 percent may have a diameter between 100 to 400 micrometers and another part as e.g. at least 10, 20, 30 or 40 percent may have a diameter between 20 and 50 micrometers. Further, a certain amount of particles (at least 10, 20, 30 or 40 percent) may have a diameter between 90 and 200 micrometers.

By having a mixture of different diameters the larger particles substantially fill the volume occupied by the glass while the smaller ones fill the cavities that remain between larger particles.

The ink that is used with the ink jet printer can comprise a soluble salt. Such solutions of soluble salts are particularly useful for ink jet printers. Furthermore, they provide a wide range of possible colors.

It may also be considered to have inks with pigments, such as metallic oxide pigments as colorants such that the ink is a suspension of a powder. Also, mixtures of soluble salts and pigments may be used in order to obtain desired color effects.

The printing is preferably performed with a dot density of higher than 180 dots per inch. The dot density may, however, be increased to be more than 270, 360, 720 or more than 1000 dots per inch. With more than 180 dots per inch the individual dots may become indistinguishable by the human eye without optical instruments, such that a natural impression is obtained.

After the printing of the decorative motif the glass may be dried before baking. Thereby any liquid is removed which would evaporate during the baking process and hence introduce undesired tensions inside the glass body.

The baking is carried out preferably at temperatures between 700°C and 1200°C and preferably between 800°C and 1000°C. At those temperatures, the glass material sufficiently melts in order to join the different glass particles to form a solid glass body. The pores of the porous surface are closed and the colorants are incorporated into the glass body. Furthermore, chemical reactions between soluble salts or pigments and the material of the glass particles are carried out keeping or creating the desired colors. At temperatures higher than 1000°C the choice of colorants is more limited since not all colorants resist such temperatures, however such temperatures above 1000°C are possible as well.

In the baking process, the temperatures are elevated in comparison to the ambient temperature. The time at which the glass is heated may be at least 15 minutes, 20 minutes or 30 minutes. Preferably heating of the glass takes place more slowly than the cooling down. The heating and cooling process together may last not more than 30 to 60 minutes.

In a further preferred embodiment of the invention a plurality of glass portions are treated at the same time, which e.g. form portions of the mosaic. For example, the plurality of glass portions may be prepared for having the porous surface before or while starting the printing or the backing.

An apparatus for preparing decorated glass has the means for providing glass with a porous surface. This means includes a press with which glass powder can be pressed. The apparatus furthermore comprises an ink jet printer for printing a decorative motif onto the porous surface.

The apparatus may furthermore comprise an oven for baking the glass. Such an oven, however, may also be separate from the apparatus.

Furthermore, means for providing a predefined amount of glass powder, which preferably includes a weight is provided. Also, a means for providing a predefined amount of liquid such as a flow meter or a/the weight may be provided. Therewith it is possible to prepare a mixture of glass powder and a liquid with a controlled composition, which then may be pressed in order to prepare the porous glass surface.

The apparatus, furthermore, preferably comprises a conveyor for carrying the glass from one place to another. The glass may be provided in a form. The conveyor may also convey such a form, which contains the glass. In particular, for the printing process a precisely controlled conveying of the glass below an ink jet printing head is preferred. This precise conveying may be necessary for printing with at least 180 dots (or more as mentioned above) per inch in a controlled manner in the conveying direction.

A glass body has a decorative motif incorporated into the glass body. The colorants that form the decorative motif are present not only at the surface, but also at a distance from the surface of the glass body by more than at least 0.1 mm. Further, the colorants are provided in a dot pattern with a dot density of more than 180 dots per inch. By having the decorative motif incorporated into the glass body at a certain distance from the surface the decorative motif is resistant against abrasive or chemical agents applied to the surface e.g. during cleaning.

Furthermore, a glass mosaic may be provided with a plurality of glass bodies, such as having more than 4, 10, 25, 50, 100 or 500 glass bodies, which form a joint decorative motif together.

Further embodiments are disclosed in the enclosed figures. It is shown in:
- Figure 1,: a schematic view of an apparatus for preparing decorated glass showing different steps of a method for preparing decorative glass;
- Figure 2,: a schematic enlarged view of a porous surface during printing and after baking;
- Figure 3,: a mosaic with a decorative motif; and
- Figure 4,: different process steps for preparing a mosaic from a digital image.

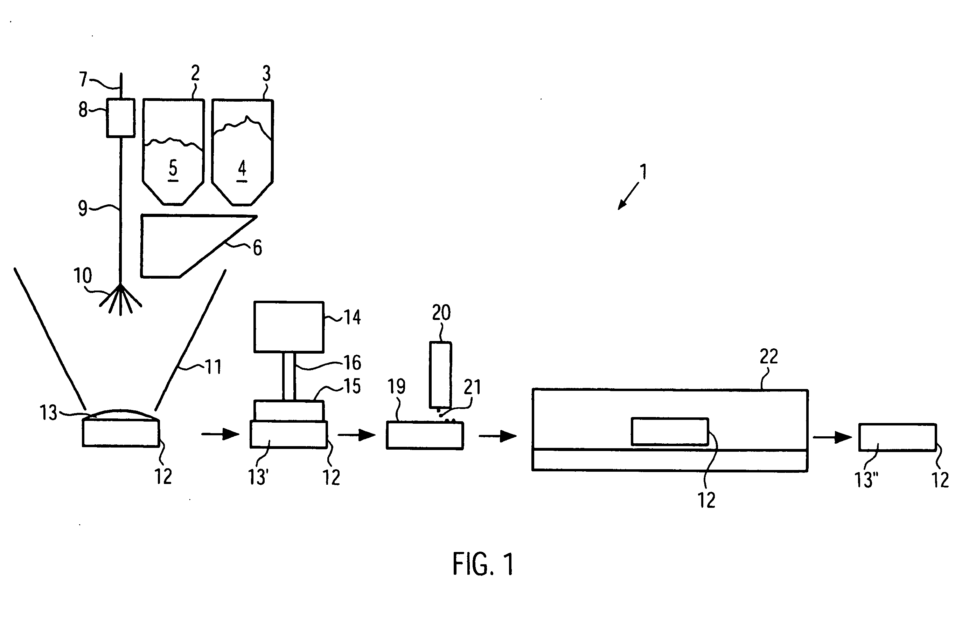

In Fig. 1, a schematic view of an apparatus for preparing a decorated glass is shown. Here two reservoirs 2, 3 are shown each of which comprises a glass powder 4, 5. The two glass powders differ in their granularity e.g. in the mean diameter of the particles or in the diameter range. More than two such reservoirs 2, 3 may be provided. It will, however, also be possible to have only one reservoir 2. In this case, it is preferred to have a mixture of glass powders with different granularity (different diameter ranges) in such a reservoir. There may be for example two or three local maxima in a diagram showing the number of particles in a given diameter range (e.g. a maxima for particles with a diameter between 200 and 250 micrometer and a maxima for particles with a diameter between 50 and 100 micrometer).

A glass powder may be obtained by milling glass pieces. Any mill suitable for milling glass may be used, but preferably a ball mill is used.

The glass may be a silica calcium sodium oxide type glass or a silica aluminum boron calcium sodium oxide glass. Other glasses with other compositions may be used as well. The glass preferably has a transition temperature (similar to a melting point) below 1000° C, 900° C or 800 °C.

Each reservoir 2, 3 may dispense a certain amount of glass powder into a weight 6. This weight may determine how much glass powder is inside. The weight may opened and closed at the bottom or may be turned over in order to deliver the glass powder into a form 12. Here a shoot or hopper 11 may be used.

Furthermore, a supply line 7, 9 for a nozzle 10 or a liquid ejection port 10 is provided with which a liquid can be added to the glass powder 13. The liquid may be added to the glass powder 13 when the glass powder is in the form 12 or before filling the glass powder into the form 12. It is preferred not to provide the liquid into the weight 6 since this will lead to adherence of glass particles in and to the weight 6 when this weight 6 should be emptied. The liquid may be provided with agents or additives for particular purposes. The additives may have for example a gluing effect for increasing adhesion between different particles. An agent or additive may be an organic or an inorganic substance dissolved in the liquid.

Once the form 12 is filled (at least partially) with the glass powder which preferably is provided with a liquid the form 12 is moved to or taken to a press 14, which has a plunger 15, 16 with which the glass powder 13 can be compressed into a compressed glass powder 13'. Any superfluous liquid will be pressed out of the glass powder.

The plunger 15 provides an even surface to the glass onto which it can be printed. The form 12 with the compressed glass powder 13' is provided to or conveyed to an ink jet printer 20. This ink jet printer may eject droplets 21 of ink onto the porous surface 19 of the glass body 13". The ink jet printing head may move in a direction perpendicular to a conveying direction in order to provide ink over the entire width of the glass 13'. It is nevertheless also possible to have more than one print head such that the print heads together cover the entire width of the glass (they may cover e.g. a width of more than 10 cm, 20 cm, 30 cm, 40 cm or 50 cm) without the need for moving any of those printing heads. A print head or a plurality of print heads therefore may be provided to be movable in two directions in order to cover the entire surface to be printed on. A plurality of print heads that are able to cover the entire width of a the glass without moving any of those heads may be movable in a direction perpendicular to the width in order to cover the entire length without having to move the glass surface. The motif is printed preferably with a resolution of at least 180 dots per inch (or more than 270, 360, 720 or more than 1000 dots per inch) in two perpendicular directions (e.g. length and width direction).

The inks used may be soluble salts. For example, for a blue or cyan color a cobalt salt may be used. Gold salts may be used for providing a magenta tone, copper salts for a yellow color and ruthenium salts for black.

While the soluble salts themselves sometimes do not have the color which they are intended for, the color is obtained upon incorporation of the elements into the glass matrix. For example, the cobalt blue tone is obtained upon the integration of cobalt oxide into the silica matrix.

In case that pigments are used, cyan or blue color is obtained by adding cobalt or cobalt aluminum containing compounds, the yellow may be obtained by pigments containing zirconium and praseodymium or titanium chrome or titanium nickel compounds. Furthermore, for black cobalt chrome iron manganese containing pigments and for green chrome containing pigments may be used. For a brown tone, iron containing pigments are suitable.

After having printed a decorative motif onto the glass 13' the form 12 with the glass is brought into or conveyed through an oven 22, wherein the glass is melted such that upon cooling down a rigid glass body 13" is obtained. In the oven 22 the baking process is carried out.

Before the baking and after the printing the glass may be dried in order to remove any liquid or to at least reduce the presence of liquid. This may be done by letting the liquid evaporate on its own (during e.g. at least one hour) or by slightly heating the glass to a temperature of less than 50°C, 75°C or 100°C or the boiling temperature of the liquid. By drying the glass the ink is also dried upon which the soluble salts (if present) crystallize. Thereby their spreading out during the melting of the glass is reduced. This prevents a blurring of the ink leading to undesired reduction of the printing quality of the motif. Further the evaporation of any liquid during the baking may cause stress or bubbles in the glass body.

The size of the largest extension of the glass body 13" may be between 1 and 20, 30, 40 or 50 cm. The thickness may be between 3 and 15 mm, for example, between 4 and 12 mm, and more preferred between 5 and 10 mm.

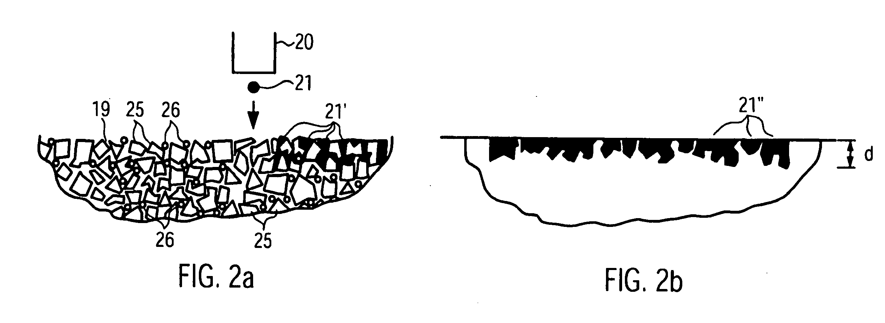

In figure 2a, an enlarged surface 19 showing the glass particles 25, 26 is shown. In the view it can be seen that two kinds of glass particles are provided, one kind of glass particle 25 having substantially larger diameters than the other glass particles 26, which are comparatively small. Larger glass particles 25 fill the volume of the glass portion while the small glass particles 26 fill the cavities between the glass particles 25.

As can be seen the surface 19 is porous since pores are provided between the different glass particles 25, 26. Ink droplets 21 ejected by an ink jet printer 20 impinge onto the surface 19 such that the ink of the ink droplet 21 is absorbed into the pores. Such absorbed ink droplets are shown with reference sign 21'.

During the baking process the glass particles 25, 26 are melted and upon cooling down form a closed surface of a glass body. The ink droplets 21' leave a colorant distribution with dots 21" in the glass body. As can be seen in fig. 2b, the colorants reach up into a depth of d, which is preferably more than 0.05 or 0.1 mm. d may be as large as 1 mm or even 2 mm depending on the ink saturation provided during ink jet printing. Preferably the ink droplets 21" are identifiable in the glass body, although they may be joined at some locations. The ink is preferably not above the glass surface. This means that the surface of the glass body is a (coloured) glass surface but does not have e.g. a colouring paint on its surface covering the glass.

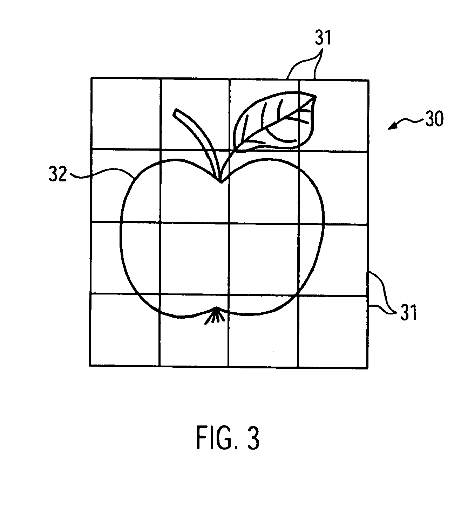

Figure 3 shows a mosaic 30, which is composed of a plurality (here 16) glass bodies 31, which show a motif 32 with a common object (here an apple).

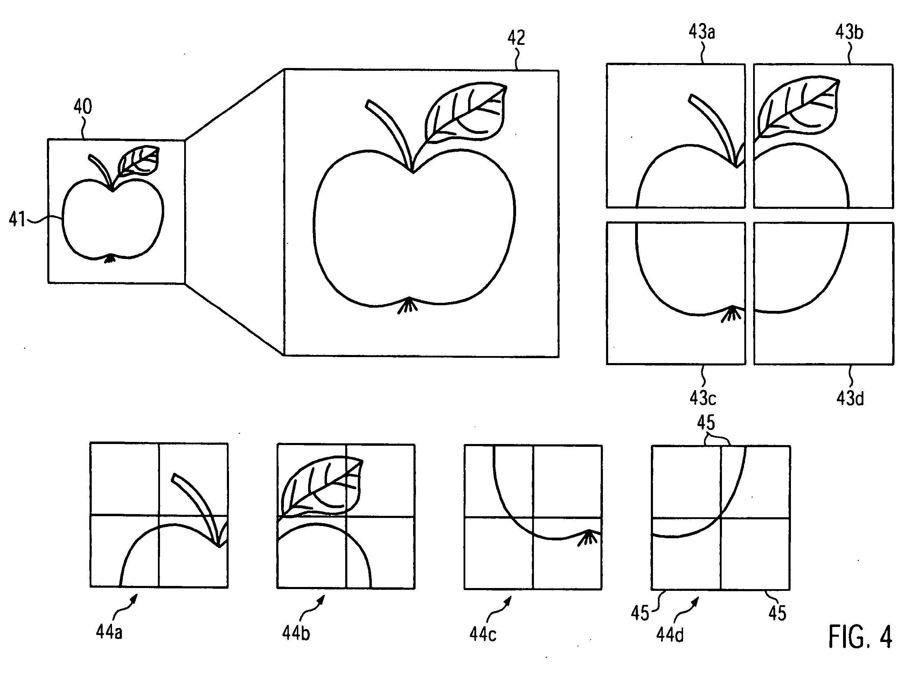

In figure 4, schematically the steps of the preparation of such a glass mosaic 30 of figure 3 is shown.

With reference sign 40 a digital image of an apple 41 is shown. In a first step, such a digital image is enlarged to another digital image 42. In this enlargement step, not only the size of the image is increased, but also the resolution of the color information may be increased. This may be done, for example, by pixel interpolation in order to have new pixels the colour information of which is interpolated from original pixels.

The digital image 42 may then be divided into smaller digital images 43a to 43d each having a portion of the enlarged digital image 42 such that all portions together have the same image information as the enlarged digital image 42 (except possibly for some image information of spacings between glass bodies; see below). A digital image 42 may be divided into for example 4 or more than 4, 10, 25, 50 or 100 smaller digital images 43.

Each image portion 43a to 43d may have such a size that it may be printed by an ink jet printer 20 in one process (e.g. one print job). The width of the ink jet printing may be limited to e.g. 10, 20, 30, 40 or 50 or more cm such that each image portion 43a to 43d should not have a width of more than the printing width of the ink jet printer 20. Furthermore, the memory of the ink jet printer may be limited such that it has to be made sure that each image portion 43a to 43d is sufficiently small such that it may be printed in one single printing process with an ink jet printer 20.

Each image portion 43a to 43d may, furthermore, be used to be printed on a plurality of glass portions. This is shown in figure 4, where each image portion 43a to 43d is provided by a glass mosaic 44a to 44d each having four glass bodies 45.

If one glass mosaic 44a is, for example, prepared at one time the different glass bodies 45 thereof may be joined by a mesh, web of the like in order to define the proper position and orientation of the different glass bodies 45 of a glass mosaic with respect to each other. This facilitates application of the glass mosaic at a desired location. The relative position of the joined glass bodies of the mosaic with respect to each other preferably is the same as the one of the glass bodies during printing of the motif. The mesh or web may be removable. On the web or mesh it is, furthermore, possible to print or stick labels, which identify the position of the mosaic with respect to a larger mosaic. For example, for the mosaic 44d it may be indicated that it is on the lower right corner of the mosaic 30 shown in fig. 3. The number of glass bodies which are joined in this way may be more than 5, 10, 25 , 50 or 100.

The spacing of the joined glass bodies provided in a defined way (e.g. by being stuck to a web or mesh) may be taken into account upon fabrication of the glass bodies. E.g. upon dividing the image 42 into smaller digital images 43a to 43d a small border portion of e.g. the half of the separation between two glass bodies in a composed mosaic (see fig. 3) may be cut off at each side of each image 43. The ink printed onto the gaps between the glass portions upon printing onto two or more glass portions at the same time leads on its own to the cutting of image information. Therefore by printing onto a plurality of glass portions in their final relative configuration with respect to each other, the gaps between the different glass portions form the necessary gaps between the image parts on their own. Thereby a straight line extending e.g. diagonally over a plurality of glass bodies of a mosaic will be a straight line upon fixing of the glass bodies on the web or mesh, although it has interruptions at the separations between different glass bodies.

## Claims

1. Method for preparing decorated glass comprising the steps of:
providing glass (13') with a porous surface (19);
wherein the glass (13') is obtained by pressing glass powder (13) which is a mixture of glass particles (4, 5) with different diameters in the range between 20 and 500 micrometers, such that a part of the glass particles has a diameter between 100 and 400 micrometers;
printing a decorative motif (32) onto the porous surface (19) with an ink jet printer (20); and
baking the glass (13").

2. Method of claim 1, wherein the glass (13') is porous.

3. Method of claim 1 or 2, wherein the glass powder (13) is pressed with a pressure of 20 to 200 bar or with a pressure between 80 to 150 or with a pressure between 100 to 120 bar.

4. Method of claim 3, wherein the glass powder (13) is humidified with a liquid, preferably water, which additionally may contain additives, wherein the amount of liquid in relation to the glass powder is preferably in the range between 1 to 4 weight percent or more preferred in the range between of 1.5 to 2.5 percent.

5. Method of any of claims 1 to 4, wherein the ink is a liquid having a soluble salt and/or a pigment, such as a metallic oxide pigment, as colorant.

6. Method of any of claims 1 to 5, wherein the printing is performed with a dot density higher than 180 dots per inch.

7. Method of any of claims 1 to 6, wherein the glass (13') is dried after the printing and before the baking.

8. Method of any of claims 1 to 7, wherein the baking is carried out at temperatures between 700°C and 1200°C, preferably between 800°C and 1000°C and/or wherein the baking process in which temperatures are above ambient temperature lasts between 15 and 60 minutes, preferably between 20 and 45 minutes.

9. Method of any of claims 1 to 8, wherein the printing of a motif (32) onto the porous surface (19) of two or more portions of a mosaic (45) is processed simultaneously.

10. An apparatus (1) for preparing decorated glass
comprising :
- means for providing glass (13') with a porous surface (19) including means for providing a predefined amount of glass powder (13) which is a mixture of glass particles (4, 5) with different diameters in the range between 20 and 500 micrometers such that a part of the glass particles has a diameter between 100 and 400 micrometers, wherein the means for providing a predefined amount of glass powder includes one or more reservoirs (2, 3) comprising the glass powder (4, 5),
and a press (14, 15, 16) for compressing glass powder;
- an inkjet printer (20) for printing a decorative motif (32) onto the porous surface (19).

11. Apparatus of claim 10, wherein the apparatus (1) further comprises an oven (20) for baking the glass (13').

12. Apparatus of any of claims 10 or 11, wherein the means (2, 3, 6) for providing a predefined amount of glass powder includes a weighing device (6) and/or a means for providing a predefined amount of liquid such as a flow-meter (8).

## Patentansprüche

1. Verfahren zum Anfertigen von dekoriertem Glas, das die folgenden Schritte umfasst:
das Bereitstellen von Glas (13') mit einer porösen Oberfläche (19);
wobei das Glas (13') durch Pressen von Glaspulver (13) gewonnen wird, das eine Mischung von Glaspartikeln (4, 5) unterschiedlicher Durchmesser im Bereich zwischen 20 und 500 Mikrometern derart ist, dass ein Teil der Glaspartikel einen Durchmesser zwischen 100 und 400 Mikrometern hat;
das Drucken eines dekorativen Motivs (32) mit einem Tintenstrahldrucker auf die poröse Oberfläche (19); und
das Brennen des Glases (13").

2. Verfahren von Anspruch 1, wobei das Glas (13') porös ist.

3. Verfahren von Anspruch 1 oder 2, wobei das Glaspulver mit einem Druck von 20 bis 200 bar oder mit einem Druck zwischen 80 bis 150 oder mit einem Druck zwischen 100 bis 120 bar gepresst wird.

4. Verfahren von Anspruch 3, wobei das Glaspulver (13) mit einer Flüssigkeit, vorzugsweise Wasser, angefeuchtet wird, die außerdem Zusatzstoffe enthalten kann, wobei der Anteil von Flüssigkeit im Verhältnis zum Glaspulver vorzugsweise im Bereich zwischen 1 bis 4 Gewichtsprozent liegt oder, noch bevorzugter, im Bereich zwischen 1,5 bis 2,5 Prozent.

5. Verfahren von einem der Ansprüche 1 bis 4, wobei die Tinte eine Flüssigkeit mit einem löslichen Salz und/ oder einem Pigment wie einem Metalloxidpigment als Farbstoff ist.

6. Verfahren von einem der Ansprüche 1 bis 5, wobei das Drucken mit einer Punktdichte von mehr als 180 Punkten pro Zoll (dpi) erfolgt.

7. Verfahren von einem der Ansprüche 1 bis 6, wobei das Glas (13') nach dem Drucken und vor dem Brennen getrocknet wird.

8. Verfahren von einem der Ansprüche 1 bis 7, wobei das Brennen bei Temperaturen zwischen 700°C und 1200°C, vorzugsweise zwischen 800°C und 1000°C durchgeführt wird und/ oder wobei der Brennvorgang, in dem die Temperatur über der Umgebungstemperatur liegt, zwischen 15 und 60 Minuten dauert, vorzugsweise zwischen 20 und 45 Minuten.

9. Verfahren von einem der Ansprüche 1 bis 8, wobei das Drucken eines Motivs (32) auf die poröse Oberfläche (19) auf zwei oder mehr Teile eines Mosaiks (45) simultan ausgeführt wird.

10. Eine Vorrichtung (1) zum Anfertigen von dekoriertem Glas, die umfasst:
- Mittel zum Bereitstellen von Glas (13') mit einer porösen Oberfläche (19), einschließlich Mittel zu Bereitstellen einer vorbestimmten Menge an Glaspulver 813), das eine Mischung aus Glaspartikeln (4, 5) mit unterschiedlichen Durchmessern im Bereich zwischen 20 und 500 Mikrometern derart ist, dass ein Teil der Glaspartikel einen Durchmesser zwischen 100 und 400 Mikrometern hat, wobei das Mittel zum Bereitstellen einer vorbestimmten Menge an Glaspulver einen oder mehrere Behälter (2, 3) mit dem Glaspulver (4, 5) umfasst;
und eine Presse (14, 15, 16) zum Zusammenpressen des Glaspulvers;
- einen Tintenstrahldrucker (20) zum Drucken eines dekorativen Motivs (32) auf die poröse Oberfläche (19).

11. Vorrichtung nach Anspruch 10, wobei die Vorrichtung weiterhin einen Ofen (20) zum Brennen des Gases umfasst.

12. Vorrichtung von einem der Ansprüche 10 oder 11, wobei das Mittel (2, 3, 6) zum Bereitstellen einer vorbestimmten Menge an Glaspulver eine Wiegevorrichtung (6) und/ oder ein Mittel zum Bereitstellen einer vorbesimmten Menge an Flüssigkeit umfasst, wie ein Durchflussmessgerät (8).

## Revendications

1. Procédé pour préparer du verre décoré comprenant les étapes de :
fourniture d'un verre (13') ayant une surface poreuse (19) ;
dans lequel le verre (13') est obtenu en pressant une poudre de verre (13) qui est un mélange de particules de verre (4, 5) présentant des diamètres différents dans la plage entre 20 et 500 micromètres, de sorte qu'une partie des particules de verre présente un diamètre entre 100 et 400 micromètres ;
impression d'un motif décoratif (32) sur la surface poreuse (19) avec une imprimante à jet d'encre (20) ; et
cuisson du verre (13").

2. Procédé selon la revendication 1, dans lequel le verre (13') est poreux.

3. Procédé selon la revendication 1 ou 2, dans lequel la poudre de verre (13) est pressée avec une pression de 20 à 200 bars ou avec une pression entre 80 à 150 ou avec une pression entre 100 à 120 bars.

4. Procédé selon la revendication 3, dans lequel la poudre de verre (13) est humidifiée avec un liquide, de préférence de l'eau, qui peut de plus contenir des additifs, dans lequel la quantité de liquide par rapport à la poudre de verre est de préférence comprise dans la plage entre 1 à 4 pour cent en poids ou plus préférentiellement dans la plage entre 1,5 à 2,5 pour cent.

5. Procédé selon l'une quelconque des revendications 1 à 4, dans lequel l'encre est un liquide comportant un sel soluble et/ou un pigment, tel qu'un pigment d'oxyde métallique, en tant que colorant.

6. Procédé selon l'une quelconque des revendications 1 à 5, dans lequel l'impression est effectuée avec une densité de points supérieure à 180 points par pouce.

7. Procédé selon l'une quelconque des revendications 1 à 6, dans lequel le verre (13') est séché après l'impression et avant la cuisson.

8. Procédé selon l'une quelconque des revendications 1 à 7, dans lequel la cuisson est effectuée à des températures entre 700°C et 1 200°C, de préférence entre 800 °C et 1 000 °C et/ou dans lequel le processus de cuisson, dans lequel des températures sont au-dessus de la température ambiante, dure entre 15 et 60 minutes, de préférence entre 20 et 45 minutes.

9. Procédé selon l'une quelconque des revendications 1 à 8, dans lequel l'impression d'un motif (32) sur la surface poreuse (19) de deux parties ou plus d'une mosaïque (45) est traitée simultanément.

10. Appareil (1) pour préparer du verre décoré comprenant :
- un moyen pour fournir du verre (13') ayant une surface poreuse (19) incluant un moyen pour fournir une quantité prédéterminée de poudre de verre (13) qui est un mélange de particules de verre (4, 5) présentant des diamètres différents dans la plage entre 20 et 500 micromètres de sorte qu'une partie des particules de verre présente un diamètre entre 100 et 400 micromètres, dans lequel le moyen pour fournir une quantité prédéterminée de poudre de verre inclut un ou plusieurs réservoirs (2, 3) comprenant la poudre de verre (4, 5),
et une presse (14, 15, 16) pour comprimer la poudre de verre ;
- une imprimante à jet d'encre (20) pour imprimer un motif décoratif (32) sur la surface poreuse (19).

11. Appareil selon la revendication 10, dans lequel l'appareil (1) comprend en outre un four (20) pour cuire le verre (13').

12. Appareil selon l'une quelconque des revendications 10 ou 11, dans lequel le moyen (2, 3, 6) pour fournir une quantité prédéterminée de poudre de verre inclut un dispositif de pesage (6) et/ou un moyen pour fournir une quantité prédéterminée de liquide tel qu'un débitmètre (8).
